# EUROPÄISCHE PATENTANMELDUNG

(11) **EP 1 355 051 A2**
(43) Veröffentlichungstag der Anmeldung: **22.10.2003**
(21) Anmeldenummer: 03100983.0
(22) Anmeldetag: 11.04.2003
(51) Int. Cl.: F02B 37/00, F02B 37/007, F02B 37/24, F02B 63/04

(54) **Energierückgewinnungssystem**

(30) Priorität: 18.04.2002 US 125127
(71) Anmelder: DEERE & COMPANY, Moline, Illinois 61265-8098 (US)
(72) Erfinder: Vuk, Carl, Denver, IA 50622 (US)
(74) Vertreter: Holst, Sönke, Dr.

(57) **Zusammenfassung**

Bekannte Energierückgewinnungssysteme für Motoren weisen einen Turbolader mit einem Kompressor auf, der mit einem Einlasskrümmer des Motors in Verbindung steht und der durch eine erste Turbine, welche mit einem Auslasskrümmer des Motors verbunden ist, angetrieben wird. Überschüssige Abgase werden zu einer zweiten Turbine geleitet, welche einen Generator antreibt, der elektrischen Strom zum Betrieb eines Startermotors zur Verfügung stellt.

Es wird ein Energierückgewinnungssystem für einen Verbrennungsmotor (10), mit einer ersten Turbine (15), welche durch Abgase des Verbrennungsmotors (10) angetriebenen wird, einer zweiten Turbine (18), welche durch von der ersten Turbine (15) kommenden Abgase angetrieben wird, einem durch die zweite Turbine antreibbaren, elektrischen Generator (20), wobei wenigstens ein eine Kühleinrichtung antreibender Elektromotor (26, 32) über eine Steuer- bzw. Regeleinheit (22, 50) mit Energie von dem Generator (20) versorgt und in Abhängigkeit von einer durch einen Temperatursensor (52) ermittelte Motortemperatur gesteuert bzw. geregelt wird.

## Beschreibung

Die Erfindung betrifft ein Energierückgewinnungssystem für einen Verbrennungsmotor, mit einer ersten Turbine, welche durch Abgase des Verbrennungsmotors angetriebenen wird, einer zweiten Turbine, welche durch von der ersten Turbine kommenden Abgase angetrieben wird, und einem durch die zweite Turbine antreibbaren, elektrischen Generator.

Die US-A-4,665,704 zeigt einen Motor mit einem Turbolader, welcher einen Kompressor umfasst, der mit einem Einlasskrümmer des Motors in Verbindung steht und der durch eine erste Turbine, welche mit einem Auslasskrümmer des Motors verbunden ist, angetrieben wird. Überschüssige Abgase werden zu einer zweiten Turbine geleitet, welche einen Generator antreibt, der elektrischen Strom zum Betrieb eines Startermotors erzeugt.

Die der Erfindung zu Grunde liegende Aufgabe wird darin gesehen, bekannte Energierückgewinnungssystem flexibler einsetzbar zu machen.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird ein Energierückgewinnungssystem für einen Motor zur Verfügung gestellt, das in Abgasen eines Motors bzw. eines Verbrennungsmotors beinhaltete Energie nutzt, welche ansonsten verschwendet würde. Diese Energie wird zum Betrieb eines Bauteils oder mehrerer Bauteile eines Motorkühlsystems verwendet.

Ein derartiges Energierückgewinnungssystem für einen Verbrennungsmotor weist eine Turboladereinheit mit einer ersten Turbine, welcher Abgase von dem Verbrennungsmotor zugeführt werden, und eine zweite Turbine auf, welche durch von der ersten Turbine kommende Abgase angetrieben wird. Die zweite Turbine treibt einen elektrischen Generator an. Der Generator liefert elektrische Energie an eine elektrische bzw. elektronische Steuer- bzw. Regeleinheit, die einen Elektromotor mit Energie versorgt, welcher eine Kühleinrichtung, wie ein Motorkühlgebläse bzw. ein Gebläse antreibt. Die Steuer- bzw. Regeleinheit kann auch einen Elektromotor versorgen, welcher eine Kühlmittelpumpe oder eine andere Kühleinrichtung oder einen Bauteil einer solchen antreibt. Die Steuer- bzw. Regeleinheit steuert bzw. regelt den Elektromotor in Abhängigkeit von einer durch einen Temperatursensor ermittelten Motortemperatur. Bei diesem Temperatursensor kann es sich beispielsweise um einen Kühlmitteltemperatur- oder auch einen Öltemperatursensor handeln.

Bei der Turbine handelt es sich vorzugsweise um eine Turbine mit variabler Geometrie, deren Geometrie derart gesteuert bzw. geregelt wird, dass ihre Energieaufnahme zu der elektrischen Last des Generators passt.

Das Energierückgewinnungssystem kann auch ein Ventil bzw. einen Abgasauslass aufweisen, mittels welchem einem Betrieb der Turbine mit zu hoher Drehzahl entgegenwirkt werden kann.

In der Zeichnung ist ein nachfolgend näher beschriebenes Ausführungsbeispiel der Erfindung dargestellt. Es zeigt:
- Fig. 1: eine vereinfachte schematische Darstellung eines Energierückgewinnungssystems,
- Fig. 2: eine perspektivische, teilweise aufgeschnittene Ansicht eines Turbogenerators mit variabler Geometrie.

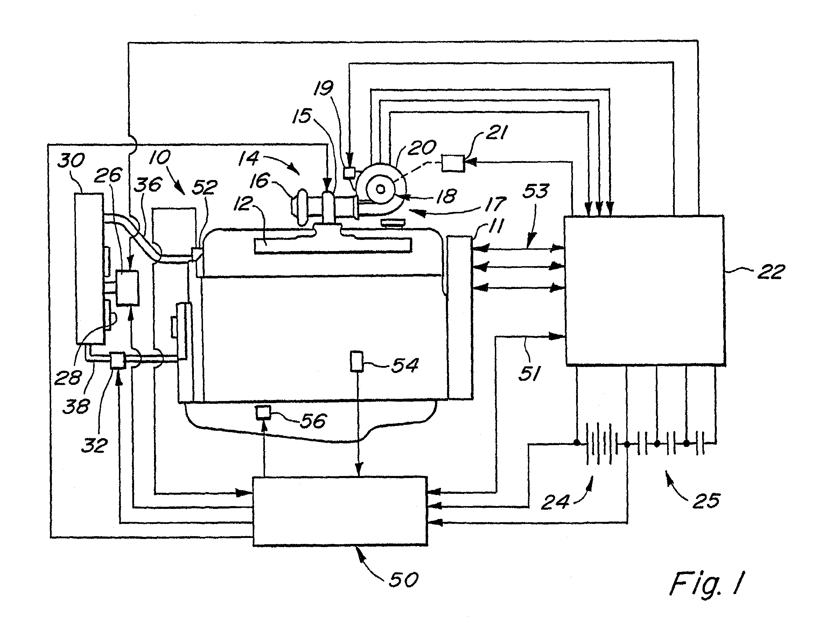

Es wird zuerst auf Figur 1 Bezug genommen, in der ein Motor bzw. ein Verbrennungsmotor 10 mit einem konventionellen Schwungradgenerator 11 und einem Auslasskrümmer 12 gezeigt wird. Eine Turboladereinheit 14 weist eine durch Abgas antreibbare erste Auslass-Turbine bzw. eine erste Turbine 15 auf, welcher Abgas von dem Auslasskrümmer 12 zugeführt wird, und welche einen Einlassluftkompressor 16 antreibt. Eine Turbogeneratoreinheit 17 weist eine zweite Turbine 18 mit variabler Geometrie auf, welche stromabwärts der ersten Turbine 15 angeordnet ist und von dieser Abgase erhält. Die Turbogeneratoreinheit 17 weist auch einen elektrischen Generator 20 auf, welcher durch die Turbine 18 angetrieben wird. Die Turbine 18 weist ein elektrisches Servomotorstellglied 19 auf, welches die Geometrie der Turbine 18 bestimmt.

Die Turbine 18 weist vorzugsweise einen konventionellen Abgasauslass (nicht dargestellt) auf, welcher die Turbine 18 davon abhält, bei hohen Motorgeschwindigkeiten zu schnell zu drehen. Der Abgasauslass weist eine Ventil (nicht gezeigt) auf, welches Abgas erlaubt, die Turbinenschaufeln (in Fig. 1 nicht gezeigt) zu umgehen und welches durch ein Abgasauslassstellglied 21 gesteuert wird.

Der Generator 20 liefert elektrische Energie, vorzugsweise dreiphasigen Strom bzw. Drehstrom bei einer hohen Spannung wie 300 Volt an eine elektrische, zwei Spannungsniveaus aufweisende Steuer- bzw. Regeleinheit 22. Die Steuer- bzw. Regeleinheit 22 liefert elektrische Energie an eine Speichereinrichtung, wie beispielsweise eine 42 Volt Batterie 24 oder einen Hochleistungskondensator 25. Die Steuereinheit 22 liefert ein Steuersignal an das Servomotorstellglied 19, welches die Geometrie der Turbine 18 steuert, so dass die durch die Turbine 18 von dem Abgas aufgenommene Leistung, zu der elektrischen Last des Generators 20 passt.

Der Schwungradgenerator 11 stellt elektrische Leistung für die Steuer- bzw. Regeleinheit 22 zur Verfügung und erhält elektrische Leistung von der Steuer- bzw. Regeleinheit 22.

Die Steuereinheit 22 liefert auch elektrische Leistung an einen Elektromotor 26, welcher ein Kühlgebläse 28 antreibt, welches Luft durch einen konventionellen Wärmetauscher 30 bläst. Bei dem Elektromotor 26 kann es sich um einen Niedrig- oder Hochspannungsmotor, wie einen 42 Volt-Motor oder einen 300 Volt-Motor handeln. Die Steuer- bzw. Regeleinheit 22 liefert auch ein Steuersignal an das Abgasauslassstellglied 21.

Die Steuereinheit 22 liefert auch elektrische Leistung mit 42 Volt an eine Motorsteuereinheit bzw. eine zweite Steuereinheit 40. Informationen werden zwischen den Steuer- bzw. Regeleinheiten 22 und 50 über ein Kabel 51 ausgetauscht. Signale werden auch zwischen der Steuer- bzw. Regeleinheit 22 und dem Schwungradgenerator 11 über ein Kabel 53 ausgetauscht.

Eine elektrische Kühlmittelpumpe 32 bringt Kühlmittel durch den Wärmetauscher 30 und den Verbrennungsmotor 10 über Kühlmittelleitungen 36 und 38 in Umlauf. Die Kühlmittelpumpe 32 weist vorzugsweise einen integrierten Motor (nicht gezeigt) bzw. einen Elektromotor auf, bei dem es sich vorzugsweise um einen Niederspannungsmotor (42V) handelt. Die Steuer- bzw. Regeleinheit 50 liefert gesteuerte 42V Leistung an die Kühlmittelpumpe 32 und steuert vorzugsweise die Kühlmittelpumpe 32 so, dass ihre Geschwindigkeit eine Funktion des Kraftstoffdurchflusses zu dem Verbrennungsmotor 10 darstellt. Die Steuer- bzw. Regeleinheit 50 liefert ein Steuersignal an den Elektromotor 26 des Kühlgebläses 28, so dass der Elektromotor 26 als eine Funktion der Kühlmitteltemperatur gesteuert wird. Die Steuer- bzw. Regeleinheit 50 nimmt ein Kühlmitteltemperatursignal von einem Kühlmitteltemperatursensor bzw. ersten Temperatursensor 52 und ein Öltemperatursignal von einem Öltemperatursensor bzw. zweiten Temperatursensor 54 auf. Die Steuer- bzw. Regeleinheit 50 kann auch gesteuerte, elektrische Leistung von 42V an eine elektrische Ölpumpe 56 liefern. Die Steuer- bzw. Regeleinheit 50 kann auch ein Steuersignal zur Steuerung von Leitschaufeln (nicht gezeigt) der Auslassturbine 15 zur Verfügung stellen.

Die Steuer- bzw. Regeleinheiten 22 und 50 können auch elektrische Energie an verschiedene andere elektrische Bauteile (nicht dargestellt) liefern. Das an das Servomotorstellglied 19 gelieferte Steuersignal kann auch als eine Funktion der ermittelten Parameter, wie der durch den Kühlmitteltemperatursensor 52 ermittelten Motortemperatur gesteuert werden. Vorzugsweise steuert die Steuer- bzw. Regeleinheit 50 die Geschwindigkeit des Elektromotors 26 und/oder der Kühlmittelpumpe 32 als eine Funktion der ermittelten Kühlmitteltemperatur und der Leistung des Motors 10. Da die Generatorleistung in Bezug zu der Motorleistung steht, kann die Kühlmittelpumpe 32 so gesteuert werden, dass ihre Leistung ansteigt, wenn die Motorleistung steigt.

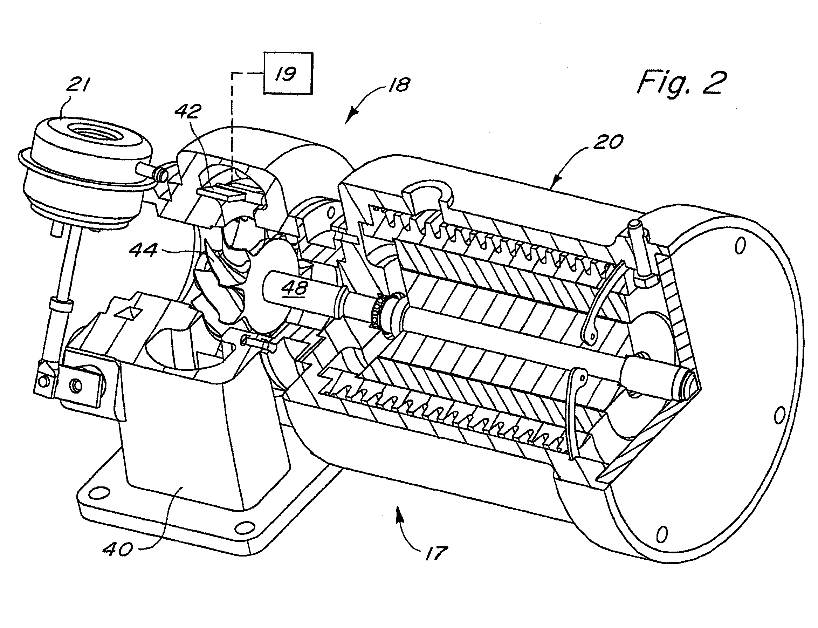

Es wird nun auch auf Figur 2 Bezug genommen. Die Turbogeneratoreinheit 17 weist eine Turbine 18 variabler Geometrie, wie eine Microturbine von Honeywell oder Capstone auf, welche Abgas von der Turbine 15 erhält, und einen elektrischen Generator 20 aufweist. Die Turbine 18 weist einen Einlass, welcher mit dem Auslass der ersten Turbine 15 verbunden ist, und einstellbare Leitschaufeln 42 auf, wie beispielsweise eine einstellbare Schaufeleinheit, wie sie von Honeywell oder Garrett hergestellt wird, welche den Abgasstrom zu den Turbinenschaufeln 44 in Abhängigkeit zu dem an das Servomotorstellglied 19 angelegten Steuersignal einstellt. Die Turbine 18 treibt den Generator 20 über eine Welle 48 an.

Vorzugsweise steuert die Steuer- bzw. Regeleinheit 22 die Turbogeneratoreinheit 17 als eine Funktion eines Eingangs von der Steuer- bzw. Regeleinheit 50, um die Gesamtwirksamkeit zu optimieren. Beispielsweise wird die Steuer- bzw. Regeleinheit 22 vorzugsweise die Turbogeneratoreinheit 17 nur aktivieren, wenn ausreichend Energie in den Abgasen vorhanden ist. Die Steuer- bzw. Regeleinheit 22 wird vorzugsweise die Turbogeneratoreinheit 17 und den Motorgenerator 11 nur zusammen aktivieren, wenn die Turbogeneratoreinheit 17 allein die geforderte elektrische Energie nicht liefern kann. Die Steuer- bzw. Regeleinheit 22 kann die Geschwindigkeit des Generators 20 zum Zweck der Geschwindigkeitssteuerung bestimmen, indem die Frequenz der Ausgabe des Generators 20 analysiert wird. Die Steuer- bzw. Regeleinheit 22 kann auch die Stellung der Leitschaufeln 42 einstellen, um die Turbinenleistung basierend auf einer vorbestimmten, gespeicherten "Übersichtstafel" und Steuerstrategien zu steuern.

Während die vorliegende Erfindung in Verbindung mit einer bestimmten Ausführungsform beschrieben wurde, sollte für den Fachmann im Licht der vorstehenden Beschreibung viele Alternativen, Modifikationen und Variationen offensichtlich sein. Der durch eine Turbine angetriebene Generator kann auch in Verbindung mit einem durch eine Kurbelwelle angetriebenen Wechselstromgenerator bzw. einer Lichtmaschine wirken und kann durch ein gemeinsames Steuersystem gesteuert werden. Elektrische Energie kann der Kühlung zugeordnete Lasten antreiben. Vorhandene Energie kann auch für Belastungen wie einem Aufladen einer Batterie, einer Beleuchtung oder einem Kabinenkomfort verwendet werden. Entsprechend ist es beabsichtig, dass die Erfindung alle solchen Alternativen, Modifikationen und Variation umfasst, welche in den Geist und den Schutzbereich der folgenden Ansprüche fallen.

## Patentansprüche

1. Energierückgewinnungssystem für einen Verbrennungsmotor (10), mit einer ersten Turbine (15), welche durch Abgase des Verbrennungsmotors (10) angetriebenen wird, einer zweiten Turbine (18), welche durch von der ersten Turbine (15) kommenden Abgase angetrieben wird, und einem durch die zweite Turbine (18) antreibbaren, elektrischen Generator (20), **dadurch gekennzeichnet, dass** wenigstens ein eine Kühleinrichtung antreibender Elektromotor (26, 32) über eine Steuer- bzw. Regeleinheit (22, 50) mit Energie von dem Generator (20) versorgt und in Abhängigkeit von einer durch einen Temperatursensor (52, 54) ermittelte Motortemperatur gesteuert bzw. geregelt wird.

2. Energierückgewinnungssystem nach Anspruch 1, **dadurch gekennzeichnet, dass** das Kühleinrichtung ein Gebläse (28) aufweist, welches vorzugsweise mit einem Wärmetauscher (30) zusammenwirkt.

3. Energierückgewinnungssystem nach Anspruch 1 oder 2, **dadurch gekennzeichnet, dass** die Kühleinrichtung eine durch einen Elektromotor betriebene Kühlmittelpumpe (32) aufweist, welche Kühlmittel durch den Verbrennungsmotor (10) und/oder einen Wärmetauscher (30) umlaufen lässt.

4. Energierückgewinnungssystem nach einem oder mehreren der vorherigen Ansprüche, **dadurch gekennzeichnet, dass** die Steuer- bzw. Regeleinheit (22, 50) den Elektromotor (26, 32) in Abhängigkeit von der Leistung des Verbrennungsmotors (10) steuert bzw. regelt.

5. Energierückgewinnungssystem nach einem oder mehreren der vorherigen Ansprüche, **dadurch gekennzeichnet, dass** zumindest die zweite Turbine (18) eine Turbine variabler Geometrie aufweist bzw. als eine derartige ausgebildet ist.

6. Energierückgewinnungssystem nach einem oder mehreren der vorherigen Ansprüche, **dadurch gekennzeichnet, dass** die Steuer- bzw. Regeleinheit (22, 50) elektrische Energie mit hoher und niedriger Spannung zur Verfügung stellen kann.

7. Energierückgewinnungssystem nach einem oder mehreren der vorherigen Ansprüche, **dadurch gekennzeichnet, dass** die erste Turbine (15) einen Einlassluftkompressor (16) antreibt.

8. Energierückgewinnungssystem nach einem oder mehreren der vorherigen Ansprüche, **dadurch gekennzeichnet, dass** die zweite Turbine (18) einen Abgasauslass aufweist, der durch ein durch die Steuer- bzw. Regeleinheit (22, 50) gesteuertes bzw. geregeltes Abgasauslassstellglied (21) gesteuert bzw. geregelt wird.

9. Energierückgewinnungssystem nach einem oder mehren der vorherigen Ansprüche, **dadurch gekennzeichnet, dass** die erste Turbine (15) einen Bestandteil einer Turboladereinheit (14) bildet.
